# EUROPÄISCHE PATENTANMELDUNG

(11) **EP 4 795 914 A1**
(43) Veröffentlichungstag der Anmeldung: **26.08.2026**
(21) Anmeldenummer: 26152014.2
(22) Anmeldetag: 15.01.2026
(51) Int. Cl.: A01B 79/00

(54) **AUTONOME LANDWIRTSCHAFTLICHE ARBEITSMASCHINE**

(30) Priorität: 19.02.2025 DE 102025106325
(71) Anmelder: CLAAS Tractor S.A.S., 78141 Vélizy-Villacoublay Cedex (FR)
(72) Erfinder: Niggemeyer, Tobias, 33098 Paderborn (DE); Rusterholtz, Thiebaud, 91470 LIMOURS (FR); Monkenbusch, Robin, 33378 Rheda-Wiedenbrück (DE)
(74) Vertreter: CLAAS Gruppe

(57) **Zusammenfassung**

Die vorliegende Erfindung betrifft eine autonome landwirtschaftliche Arbeitsmaschine (1), umfassend zumindest ein Sensorsystem (8) mit zumindest einem Sensor (15) zur Umfelddetektion der Arbeitsmaschine (1) sowie eine Steuerungsvorrichtung (7), die zum Empfang und zur Auswertung von Umfelddaten (16), die das zumindest eine Sensorsystem (8) bereitstellt und übermittelt, ausgeführt und eingerichtet ist, wobei der zumindest eine Sensor (15) des zumindest einen Sensorsystems (8) auf einer Sensortechnologie basiert, welche zur Detektion von wetterspezifischen Daten (16.1) im lokalen Arbeitsmaschinenumfeld (17) eingerichtet ist, um bei einer von einer Wetterprognose abweichenden Veränderung des Wetters im Arbeitsmaschinenumfeld (17) eine durch die Steuerungsvorrichtung (7) auszuführende Reaktionsroutine (18) zu initiieren.

## Beschreibung

Die vorliegende Erfindung betrifft eine autonome landwirtschaftliche Arbeitsmaschine gemäß dem Oberbegriff des Anspruches 1. Weiterhin ist ein Verfahren zum Betreiben einer autonomen landwirtschaftlichen Arbeitsmaschine Gegenstand der vorliegenden Erfindung.

Zum Betreiben einer autonomen landwirtschaftlichen Arbeitsmaschine ist es erforderlich, Umfelddaten zu erfassen, um die Durchführung einer landwirtschaftlichen Aufgabe durch die autonome Arbeitsmaschine zu steuern und zu überwachen. Die autonome Arbeitsmaschine umfasst zumindest ein Sensorsystem mit zumindest einem Sensor zur Umfelddetektion der Arbeitsmaschine sowie eine Steuerungsvorrichtung. Die Steuerungsvorrichtung ist zum Empfang und zur Auswertung von Umfelddaten, die das zumindest eine Sensorsystem bereitstellt und übermittelt, ausgeführt und eingerichtet.

Eine autonome landwirtschaftliche Arbeitsmaschine der eingangs genannten Art ist aus der DE 10 2022 110 116 A1 bekannt. Eine von der autonomen landwirtschaftlichen Arbeitsmaschine durchzuführende landwirtschaftlichen Aufgabe wird auf Basis von digitalen Abbildern eines zu bearbeitenden Feldes sowie der autonomen landwirtschaftlichen Arbeitsmaschine durch eine entfernte Verarbeitungseinrichtung simuliert, um Anweisungen zu generieren, die an eine Steuerungsvorrichtung zur Ausführung übertragen werden. Zum Generieren des digitalen Abbilds der zu bearbeitenden landwirtschaftlichen Fläche greift die Verarbeitungseinrichtung auf Bodendaten, Bestandsdaten, Ertragsdaten und/oder Flächendaten, Geodaten und Wetterdaten zu, welche in einer Datenbank hinterlegt sind.

Die autonome Arbeitsmaschine umfasst ein Sensorsystem, welches der Generierung von Echtzeitdaten dient, welche die Betriebsparameter und Umgebungsparameter repräsentieren. Die Echtzeitdaten werden an die entfernte Verarbeitungseinrichtung übertragen, welche die Simulation der durchzuführenden landwirtschaftlichen Aufgabe durchgeführt hat, um die digitalen Abbilder anzupassen. Zudem werden die generierten Echtzeitdaten von der Steuerungsvorrichtung der autonomen Arbeitsmaschine verarbeitet, um die empfangenen Anweisungen selbsttätig anzupassen.

Ausgehend vom vorstehend genannten Stand der Technik liegt der Erfindung die Aufgabe zugrunde, eine autonome landwirtschaftliche Arbeitsmaschine der eingangs genannten Art weiterzubilden, welche auf witterungsbedingte Einflüsse auf die durchzuführende landwirtschaftliche Aufgabe im unmittelbaren Umfeld der autonomen Arbeitsmaschine selbsttätig reagiert.

Diese Aufgabe wird durch eine autonome landwirtschaftliche Arbeitsmaschine mit den Merkmalen des Anspruches 1 gelöst.

Gemäß dem Anspruch 1 wird eine autonome landwirtschaftliche Arbeitsmaschine vorgeschlagen, die zumindest ein Sensorsystem mit zumindest einem Sensor zur Umfelddetektion der Arbeitsmaschine sowie eine Steuerungsvorrichtung, die zum Empfang und zur Auswertung von Umfelddaten, die das zumindest eine Sensorsystem bereitstellt und übermittelt, ausgeführt und eingerichtet ist, umfasst. Erfindungsgemäß ist vorgesehen, dass der zumindest eine Sensor des zumindest einen Sensorsystems auf einer Sensortechnologie basiert, welche zur Detektion von wetterspezifischen Daten im lokalen Arbeitsmaschinenumfeld eingerichtet ist, um bei einer von einer Wetterprognose abweichenden Veränderung des Wetters im Arbeitsmaschinenumfeld eine durch die Steuerungsvorrichtung auszuführende Reaktionsroutine zu initiieren.

Das zumindest eine Sensorsystem ermöglicht das autonome Fahren und Arbeiten auf einem zu bearbeitenden Feld, indem es die visuelle Wahrnehmung eines Fahrers ersetzt. Das zumindest eine Sensorsystem der autonomen Arbeitsmaschine erfasst das Wetter im lokalen Arbeitsmaschinenumfeld der Arbeitsmaschine, um auf Veränderungen zu reagieren. Die Wettersituation im lokalen Arbeitsmaschinenumfeld der autonomen Arbeitsmaschine kann dabei als "Mikrowetter" bezeichnet werden, während mit "Makrowetter" die Wettersituation aus Wettermodellen für eine Region beschrieben wird, in der sich das zu bearbeitende Feld befindet. Das Ausführen der Reaktionsroutine dient dazu, um auf vor allem plötzliche und unvorhergesehene Wetterveränderungen auf dem zu bearbeitenden Feld zu reagieren, die sich abweichend von der Prognose einstellen können, und auf die ein Fahrer in einer bemannten Maschine ebenfalls reagieren würde.

Das lokale Arbeitsmaschinenumfeld beschränkt sich zumindest in der Fläche im Wesentlichen auf das zu bearbeitende Feld und/oder den durch den zumindest einen Sensor vorgegebenen Sensordetektionsbereich, der von der Sensortechnologie abhängig ist. Das durch den zumindest einen Sensor erfassbare lokale Arbeitsmaschinenumfeld kann sich, abhängig von der Sensortechnologie, somit auch auf das unmittelbare Umfeld der Arbeitsmaschine beschränken.

Insbesondere kann das zumindest eine Sensorsystem mehrere Sensoren umfassen, die auf verschiedenen Sensortechnologien basieren. Sensoren mit unterschiedlichen Sensortechnologien ermöglichen es, das Auftreten plötzlicher und unvorhergesehener Wetterveränderungen schneller und präziser zu bestimmen.

Dabei kann der zumindest eine Sensor des zumindest einen Sensorsystems auf einer Kameratechnologie und/oder einer akustischen Sensortechnologie basieren. Der zumindest eine auf Kameratechnologie und/oder akustischer Sensortechnologie basierende Sensor ermöglicht es, eine kurzfristige Wetterveränderung zeitnah und zumindest der Art nach zu detektieren.

Zusätzlich oder alternativ kann das zumindest eine Sensorsystem als zumindest einen weiteren Sensor einen Temperatursensor, ein Anemometer, ein Hygrometer, ein Barometer und/oder ein Ombrometer umfassen. Neben Temperatur, Windstärke, Luftfeuchtigkeit und/oder Luftdruck als wetterspezifischen Daten im lokalen Arbeitsmaschinenumfeld kann auch eine Niederschlagsmenge bestimmt werden.

Bevorzugt kann die Steuerungsvorrichtung dazu eingerichtet sein, basierend auf einer durchgeführten Geschwindigkeitsmessung und einer Ermittlung einer Drehzahl von Antriebsrädern eine Bestimmung eines Schlupfes durchzuführen. Die Bestimmung der Änderung von Schlupf bei einer mit Antriebsrädern ausgeführten autonomen Arbeitsmaschine ermöglicht es, in Verbindung mit detektierten Niederschlagswerten auf die Niederschlagsintensität zu schließen respektive auf das Erfordernis des Ausführens einer Reaktionsroutine.

Gemäß einer Weiterbildung kann die Steuerungsvorrichtung dazu ausgeführt und eingerichtet sein, die Auswertung der von dem zumindest einen Sensorsystem empfangenen wetterspezifische Daten durch ein neuronales Netzwerk durchzuführen.

Insbesondere können Schwellwerte für von dem zumindest einen Sensorsystem empfangene wetterspezifische Daten in einer Speichereinheit der Steuerungsvorrichtung hinterlegt oder hinterlegbar sein. Die Werte der hinterlegten oder hinterlegbaren Schwellwerte orientieren sich an der Sensortechnologie des jeweiligen Sensors.

Dabei kann das Überschreiten zumindest eines der Schwellwerte die Ausführung der Reaktionsroutine initiieren. Das Vorsehen von Schwellwerten, die überschritten sein müssen, um die Ausführung der Reaktionsroutine zu initiieren, verhindert, dass bereits auf geringfügige Änderungen im detektierten "Mikrowetter" reagiert wird, wodurch die Effizienz der autonomen Arbeitsmaschine signifikant eingeschränkt werden könnte.

Bevorzugt kann die Reaktionsroutine automatisch die Ausführung eines vorprogrammierten Ablaufs durch die autonome Arbeitsmaschine initiieren oder einen Hinweis an eine entfernte Benutzerschnittstelle übermitteln, welcher eine Aufforderung zum Eingreifen in die autonome Steuerung der autonomen Arbeitsmaschine durch einen Bediener umfasst. Die entfernte Benutzerschnittstelle kann zugleich vom Bediener verwendet werden, um in die autonome Steuerung der autonomen Arbeitsmaschine einzugreifen. Hierzu können mittels der Benutzerschnittstelle Steuerbefehle an die Steuerungsvorrichtung der autonomen Arbeitsmaschine übertragen werden.

Beim Übermitteln der Aufforderung zum Eingreifen in die autonome Steuerung an den Bediener handelt es sich um die einfachste Reaktion auf eine unvorhergesehene Wetterveränderung. Der manuelle Eingriff des Bedieners erfordert, dass dieser sich einen Überblick über die bestehenden Witterungsbedingungen im lokalen Arbeitsmaschinenumfeld verschafft. Dies kann insbesondere unter Verwendung von Bilddaten erfolgen, welche durch den zumindest einen auf der Kameratechnologie basierenden Sensor des Sensorsystems, vorzugsweise in Echtzeit, an die Benutzerschnittstelle übermittelt werden.

Beim automatischen Ausführen der Reaktionsroutine entscheidet ein Auswertungsalgorithmus der Steuerungsvorrichtung über die auszuführende Reaktionsroutine respektive welche Maßnahme als für geeignet angesehen wird, um auf eine unvorhergesehene Wetterveränderung zu reagieren. Hierzu kann der Auswertungsalgorithmus der Steuerungsvorrichtung auf künstlicher Intelligenz beruhen, vorzugsweise ein trainiertes neuronales Netzwerk nutzen.

Insbesondere kann der vorprogrammierte Ablauf das Speichern der letzten Arbeitsposition und das Fortführen der landwirtschaftlichen Arbeitsaufgabe, das Anfahren einer vordefinierten Warteposition oder das Anfahren einer vordefinierten Abholposition umfassen. Das Speichern der letzten Arbeitsposition dient dazu, nach einer Unterbrechung durch das Anfahren einer vordefinierten Warteposition an die letzte Arbeitsposition zurückzukehren, um die landwirtschaftliche Arbeitsaufgabe fortzusetzen. Dies kann auch vorgesehen sein, wenn eine vordefinierte Abholposition zur Abholung angefahren wird, um die landwirtschaftliche Arbeitsaufgabe zu einem späteren Zeitpunkt fortzuführen.

Alternativ oder zusätzlich kann die Steuerungsvorrichtung zum Empfang und zur Ausführung einer durch den Bediener vorgegebenen Instruktion ausgeführt und eingerichtet sein.

Gemäß einer bevorzugten Weiterbildung kann die Arbeitsmaschine zur Fortführung der landwirtschaftlichen Arbeitsaufgabe die gespeicherte letzte Arbeitsposition ansteuern, wobei die Steuerungsvorrichtung dazu eingerichtet ist, von dem zumindest einen auf Kameratechnologie basierenden Sensor des zumindest einen Sensorsystems solche Umfelddaten zu empfangen, die auf die aktuelle Beschaffenheit des zu bearbeitenden Feldes schließen lassen.

Bevorzugt kann das zumindest eine Sensorsystem dazu eingerichtet sein, kontinuierlich wetterspezifische Daten an die entfernte Benutzerschnittstelle und/oder ein entferntes Verwaltungssystem zu übermitteln. Insbesondere georeferenzierte wetterspezifische Daten können von dem entfernten Verwaltungssystem protokolliert und ausgewertet werden.

Die eingangs gestellte Aufgabe wird weiterhin durch ein Verfahren zum Betreiben einer autonomen landwirtschaftlichen Arbeitsmaschine gemäß dem nebengeordneten Anspruch 15 gelöst.

Gemäß dem Anspruch 15 wird ein Verfahren zum Betreiben einer autonomen landwirtschaftlichen Arbeitsmaschine vorgeschlagen, welche zumindest ein Sensorsystem mit zumindest einem Sensor zur Umfelddetektion der Arbeitsmaschine sowie eine Steuerungsvorrichtung, die zum Empfang und zur Auswertung von Umfelddaten, die das zumindest eine Sensorsystem bereitstellt und übermittelt, ausgeführt und eingerichtet ist, umfasst, wobei der zumindest eine Sensor des zumindest einen Sensorsystems auf einer Sensortechnologie basiert, durch welche wetterspezifische Daten im lokalen Arbeitsmaschinenumfeld detektiert werden, wobei bei einer von einer Wetterprognose abweichenden Veränderung des Wetters im Arbeitsmaschinenumfeld eine durch die Steuerungsvorrichtung auszuführende Reaktionsroutine initiiert wird. Auf alle Ausführungen zu der erfindungsgemäßen autonomen landwirtschaftlichen Arbeitsmaschine, die geeignet sind, das Verfahren insgesamt zu erläutern, darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine autonome landwirtschaftliche Arbeitsmaschine bei der Durchführung einer landwirtschaftlichen Arbeitsaufgabe auf einem Feld; und
- Fig. 2: schematisch und exemplarisch eine Steuerungsvorrichtung und ein mit der Steuerungsvorrichtung kommunizierendes Sensorsystem der autonomen landwirtschaftlichen Arbeitsmaschine.

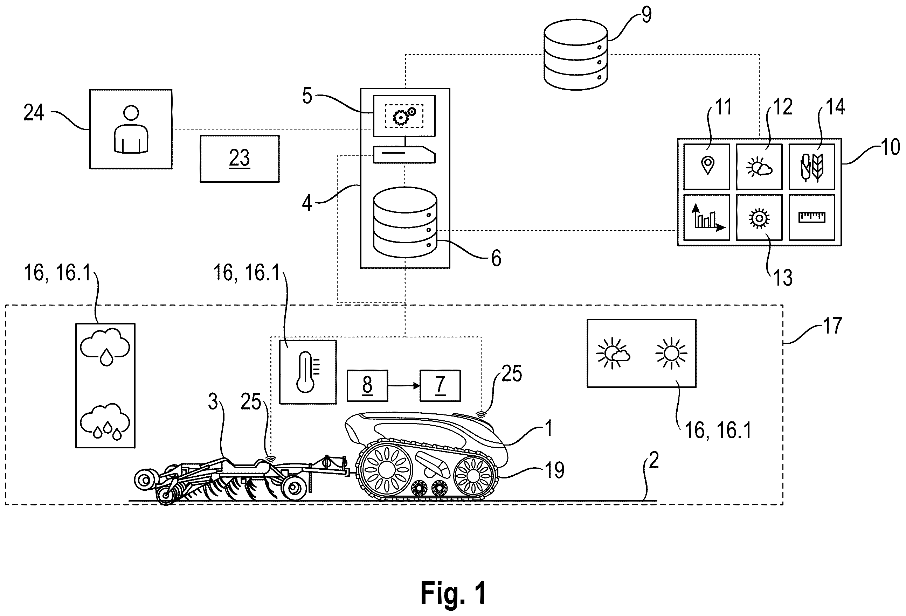

In Fig. 1 ist schematisch und exemplarisch eine autonome landwirtschaftliche Arbeitsmaschine 1 bei der Durchführung einer landwirtschaftlichen Arbeitsaufgabe 14 auf einem Feld 2 dargestellt. Zur Durchführung der landwirtschaftlichen Arbeitsaufgabe 14 ist ein Anbaugerät 3 an die autonome Arbeitsmaschine 1 adaptiert, im dargestellten Ausführungsbeispiel ein Grubber. Andere Arten und Formen von Anbaugeräten 3 sind ebenfalls denkbar, wie beispielsweise Pflug, Spritze, Sämaschine und dergleichen.

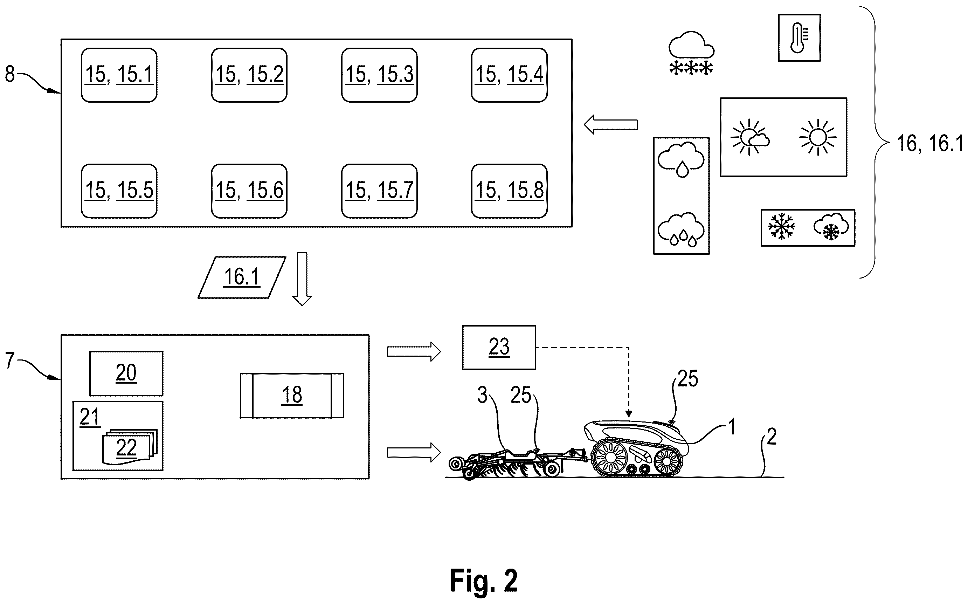

Ein datenbankbasiertes Verwaltungssystem 4, das eine Verarbeitungseinrichtung 5 und eine mit dieser zur Übertragung von Daten verbundene Datenbank 6 umfasst, dient dazu, der autonomen Arbeitsmaschine 1 und dem daran adaptierten Anbaugerät 3 für die Durchführung der landwirtschaftlichen Arbeitsaufgabe 14 erforderliche Informationen bereitzustellen. Die Datenbank 6 kann als zentrale Datenbank 6 oder aber als dezentrale, also verteilte, Datenbank 8 ausgebildet sein. Sowohl die Verarbeitungseinrichtung 5 als auch die Datenbank 6 sind mit einer autonomen landwirtschaftlichen Arbeitsmaschine 1 und gegebenenfalls mit dem an die autonome landwirtschaftliche Arbeitsmaschine 1 adaptierten Anbaugerät 3 zur Übertragung von Daten verbunden. Insbesondere ist die Verarbeitungseinrichtung 5 mit einer Steuerungsvorrichtung 7 der autonomen landwirtschaftlichen Arbeitsmaschine 1 und einem in Fig. 2 schematisch näher dargestellten Sensorsystem 8 der autonomen Arbeitsmaschine 1 verbunden. Das Sensorsystem 8 kann unter anderem die Daten ermitteln, die Betriebsparameter der autonomen landwirtschaftlichen Arbeitsmaschine 1, insbesondere Daten zu Arbeitsaggregaten der autonomen landwirtschaftlichen Arbeitsmaschine 1, wie Antriebsmotoren, Getriebe, Antriebsrädern oder dergleichen, und/oder Betriebsparameter des an die autonome landwirtschaftliche Arbeitsmaschine 1 adaptierten Anbaugerätes 3, beispielsweise ein Grubber, ein Pflug, eine Egge, ein Mähwerk oder dergleichen, oder ein Vorsatzgerät, beispielsweise ein Schneidwerk, repräsentieren. Das datenbankbasierte Verwaltungssystem 4, das die Verarbeitungseinrichtung 5 und die Datenbank 6 umfasst, bilden demnach ein externes Verwaltungssystem 4, das sich nicht in der autonomen landwirtschaftlichen Arbeitsmaschine 1 und/oder einem an die autonome landwirtschaftliche Arbeitsmaschine 1 adaptierten Anbaugerät 3 befindet. Die Verarbeitungseinrichtung 5 kann weiterhin mit einer sogenannten Referenzdatenbank 9 zur Übertragung von Daten verbunden sein, in der sogenannte Referenzdaten 10 hinterlegt sein können, auf welche die Verarbeitungseinrichtung 5 zugreifen kann.

Die Referenzdaten 10, die der Planung der durchzuführenden landwirtschaftlichen Arbeitsaufgabe 14 durch die autonome Arbeitsmaschine 1 zugrunde gelegt werden, umfassen unter anderem topgrafische Daten 11 des Feldes 2 sowie Daten einer Wetterprognose 12 für den Zeitraum der Durchführung der landwirtschaftlichen Arbeitsaufgabe 14, die aus externen Datenquellen abgerufen werden. Weitere Daten sind Einstellparameter 13 für die autonome Arbeitsmaschine 1 und das Anbaugerät 3, welche zu Beginn der Durchführung der landwirtschaftlichen Arbeitsaufgabe 14 eingestellt werden, sowie die Art und der Umfang der durchzuführenden landwirtschaftlichen Arbeitsaufgabe 14.

Das Sensorsystem 8 umfasst zumindest einen Sensor 15 zur Umfelddetektion der autonomen Arbeitsmaschine 1. Die Steuerungsvorrichtung 7 ist zum Empfang und zur Auswertung von Umfelddaten 16, die das zumindest eine Sensorsystem 8 bereitstellt und übermittelt, ausgeführt und eingerichtet. Dazu werden die Umfelddaten 16 im lokalen Arbeitsmaschinenumfeld 17 detektiert. Das lokale Arbeitsmaschinenumfeld 17 beschränkt sich zumindest in der Fläche im Wesentlichen auf das zu bearbeitende Feld 2 und/oder den durch den zumindest einen Sensor 15 vorgegebenen Sensordetektionsbereich. Die Wettersituation im lokalen Arbeitsmaschinenumfeld 17 der autonomen Arbeitsmaschine 1 kann dabei als "Mikrowetter" bezeichnet werden, während mit "Makrowetter" die Wettersituation aus Wettermodellen für eine Region beschrieben wird, in der sich das zu bearbeitende Feld befindet.

Der zumindest eine Sensor 15 des zumindest einen Sensorsystems 8 basiert auf einer Sensortechnologie, welche zur Detektion von wetterspezifischen Daten 16.1 im lokalen Arbeitsmaschinenumfeld 17 eingerichtet ist, um bei einer von einer Wetterprognose abweichenden Veränderung des Wetters im Arbeitsmaschinenumfeld 17 eine Reaktionsroutine 18 auszuführen. Der Sensordetektionsbereich variiert somit in Abhängigkeit von der verwendeten Sensortechnologie des zumindest einen Sensors 15.

Die Darstellung in Fig. 2 zeigt schematisch und exemplarisch die Steuerungsvorrichtung 7 und das zumindest eine mit der Steuerungsvorrichtung 7 kommunizierende Sensorsystem 8 der autonomen landwirtschaftlichen Arbeitsmaschine 1. Wie bereits ausgeführt, basiert der zumindest eine Sensor 15 des zumindest einen Sensorsystems 8 auf einer Sensortechnologie, welche zur Detektion von wetterspezifischen Daten 16.1 als Umfelddaten 16 im lokalen Arbeitsmaschinenumfeld 17 eingerichtet ist. Bevorzugt umfasst das zumindest eine Sensorsystem 8 mehrere Sensoren 15, die auf verschiedenen Sensortechnologien basieren, um das Auftreten plötzlicher und unvorhergesehener Wetterveränderungen schneller und präziser bestimmen zu können.

So kann ein Sensor 15 des zumindest einen Sensorsystems 8 auf Kameratechnologie und/oder akustischer Sensortechnologie basieren. Hierzu kann das Sensorsystem 8 eine Kamera 15.1 und/oder einen passiven oder aktiven akustischen Sensor 15.2 als Sensor 15 aufweisen.

Alternativ oder zusätzlich kann das zumindest eine Sensorsystem 8 als zumindest einen weiteren Sensor 15 einen Temperatursensor 15.3, ein Anemometer 15.4, ein Hygrometer 15.5, ein Barometer 15.6 und/oder Ombrometer 15.7 umfassen. Durch einen oder mehrere der vorstehend aufgelisteten Sensoren 15 lassen sich Temperatur, Windstärke, Luftfeuchtigkeit und/oder Luftdruck als wetterspezifischen Daten im lokalen Arbeitsmaschinenumfeld sowie eine Niederschlagsmenge bestimmen.

Mittels der vorstehend genannten Sensoren 15, deren Anzahl ebenso variieren kann und deren Verwendung alternativ erfolgen kann, werden die wetterspezifischen Daten 16.1 im lokalen Arbeitsmaschinenumfeld 17 detektiert.

Die autonome Arbeitsmaschine 1 kann abweichend von den im Ausführungsbeispiel dargestellten, als reines Raupenlaufwerk 19 ausgeführten, Bodeneingriffsmitteln Antriebsräder aufweisen. Des Weiteren kann die Steuerungsvorrichtung 8 dazu eingerichtet sein, basierend auf einer durchgeführten Geschwindigkeitsmessung und einer Ermittlung einer Drehzahl der Antriebsräder der autonomen Arbeitsmaschine 1 durch zumindest einen Drehzahlsensor 15.8 eine Bestimmung eines auftretenden Schlupfes durchzuführen. So kann eine Änderung des bestimmten Schlupfes in Verbindung mit der Bestimmung der Intensität von Niederschlag, in Form von Regen, Graupel oder Schnee, herangezogen werden, um das Ausführen der Reaktionsroutine 18 zu initiieren, was weiter unten noch näher erläutert wird.

Die wetterspezifischen Daten 16.1 werden an die Steuerungsvorrichtung 7 zur Auswertung übermittelt. Bevorzugt ist die Steuerungsvorrichtung 7 dazu ausgeführt und eingerichtet, die Analyse der von dem zumindest einen Sensorsystem 8 empfangenen Umfelddaten 16 sowie wetterspezifischen Daten 16.1 durch ein neuronales Netzwerk 20 durchzuführen. Bei einem automatischen Ausführen der Reaktionsroutine kann ein Auswertungsalgorithmus der Steuerungsvorrichtung 7 über die Vorgehensweise entscheiden respektive welche Maßnahme als für geeignet angesehen wird, um auf eine unvorhergesehene Wetterveränderung zu reagieren. Hierzu kann der Auswertungsalgorithmus der Steuerungsvorrichtung 7 auf künstlicher Intelligenz beruhen, vorzugsweise das trainiertes neuronales Netzwerk 20 nutzen.

In einer Speichereinheit 21 der Steuerungsvorrichtung 7 sind Schwellwerte 22 für von dem zumindest einen Sensorsystem 8 empfangene wetterspezifische Daten 16.1 hinterlegt. Jedem Sensor 15 ist entsprechend der verwendeten Sensortechnologie zumindest ein Schwellwert 22 zugeordnet. Das Überschreiten zumindest eines der Schwellwerte 22 für die wetterspezifischen Daten 16.1, die von dem zumindest einen Sensor 15 bereitgestellt werden, initiiert die Ausführung der Reaktionsroutine 18. Das Vorsehen von Schwellwerten 22, die überschritten sein müssen, um die Ausführung der Reaktionsroutine 18 zu initiieren, verhindert, dass bereits auf geringfügige Änderungen im "Mikrowetter" reagiert wird, wodurch die Effizienz der autonomen Arbeitsmaschine 1 signifikant eingeschränkt werden könnte.

Die Reaktionsroutine 18 kann das automatische Ausführen eines vorprogrammierten Ablaufs durch die autonome Arbeitsmaschine 1 initiieren. Alternativ kann die Reaktionsroutine 18 einen Hinweis an eine entfernte Benutzerschnittstelle 23 übermitteln, welcher eine Aufforderung zum Eingreifen in die autonome Steuerung der Arbeitsmaschine 1 durch einen Bediener 24 umfasst. Die Benutzerschnittstelle 23 kann dabei auch der Überwachung der autonomen Arbeitsmaschine 1 im laufenden Betrieb dienen.

Der vorprogrammierte Ablauf kann das Speichern der letzten Arbeitsposition der autonomen Arbeitsmaschine 1 und das Fortführen der landwirtschaftlichen Arbeitsaufgabe, das Anfahren einer vordefinierten Warteposition und/oder das Anfahren einer vordefinierten Abholposition umfassen. Die vom vorprogrammierten Ablauf umfassten Reaktionen, das Fortführen der landwirtschaftlichen Arbeitsaufgabe, das Anfahren einer vordefinierten Warteposition und/oder das Anfahren einer vordefinierten Abholposition, sind abhängig von der Intensität der Veränderung des Wetters im Arbeitsmaschinenumfeld 17.

So kann bei leichtem Regen eine Warteposition der autonomen Arbeitsmaschine 1 am Feldrand des Feldes 2 angesteuert werden, um dort zu warten, bis der Regen aufhört, um anschließend die Durchführung der Arbeitsaufgabe erneut aufzunehmen. Alternativ kann durch die autonome Arbeitsmaschine 1 eine vordefinierte Abholposition angesteuert werden, wenn der Regen so stark ist, dass eine sinnvolle Fortführung der landwirtschaftlichen Arbeitsaufgabe unter den sich daraus ergebenden Rahmenbedingungen, wie aufgeweichtem Feldboden oder dergleichen, nicht möglich ist.

Des Weiteren kann die Steuerungsvorrichtung 7 zum Empfang und zur Ausführung einer durch den Bediener 24 vorgegebenen Instruktion ausgeführt und eingerichtet sein. Der Bediener 24 kann auf den an die entfernte Benutzerschnittstelle 23 übertragenen Hinweis in der Weise reagieren, indem der Bediener 24 darüber entscheidet, ob die autonome Arbeitsmaschine 1 die landwirtschaftliche Arbeitsaufgabe fortführt oder eine vordefinierte Warteposition oder eine vordefinierte Abholposition anfährt.

Der manuelle Eingriff des Bedieners 24 erfordert, dass dieser sich einen Überblick über die bestehenden Witterungsbedingungen im lokalen Arbeitsmaschinenumfeld 17 verschaffen kann. Dies kann insbesondere unter Verwendung von Bilddaten erfolgen, welche durch den zumindest einen auf der Kameratechnologie basierenden Sensor 15, die Kamera 15.1, des Sensorsystems 8, vorzugsweise in Echtzeit, an die Benutzerschnittstelle 23 übermittelt werden.

Die Kommunikation des Sensorsystems 8 mit der Benutzerschnittstelle 23 erfolgt bevorzugt drahtlos mittels der Kommunikationseinrichtung 25 die der autonomen Arbeitsmaschine 1 und/oder dem Anbaugerät 3 zugeordnet ist.

### Bezugszeichenliste

- 1: Autonome Arbeitsmaschine
- 2: Feld
- 3: Anbaugerät
- 4: Verwaltungssystem
- 5: Verarbeitungseinrichtung
- 6: Datenbank
- 7: Steuerungsvorrichtung
- 8: Sensorsystem
- 9: Referenzdatenbank
- 10: Referenzdaten
- 11: Topografische Daten
- 12: Wetterprognose
- 13: Einstellparameter
- 14: landwirtschaftliche Arbeitsaufgabe
- 15: Sensor
- 15.1: Kamera
- 15.2: Akustischer Sensor
- 15.3: Temperatursensor
- 15.4: Anemometer
- 15.5: Hygrometer
- 15.6: Barometer
- 15.7: Ombrometer
- 15.8: Drehzahlsensor
- 16: Umfelddaten
- 16.1: Wetterspezifische Daten
- 17: Arbeitsmaschinenumfeld
- 18: Reaktionsroutine
- 19: Raupenlaufwerk
- 20: Neuronales Netzwerk
- 21: Speichereinheit
- 22: Schwellwert
- 23: Benutzerschnittstelle
- 24: Bediener

## Patentansprüche

1. Autonome landwirtschaftliche Arbeitsmaschine (1), umfassend zumindest ein Sensorsystem (8) mit zumindest einem Sensor (15) zur Umfelddetektion der Arbeitsmaschine (1) sowie eine Steuerungsvorrichtung (7), die zum Empfang und zur Auswertung von Umfelddaten (16), die das zumindest eine Sensorsystem (8) bereitstellt und übermittelt, ausgeführt und eingerichtet ist, **dadurch gekennzeichnet, dass** der zumindest eine Sensor (15) des zumindest einen Sensorsystems (8) auf einer Sensortechnologie basiert, welche zur Detektion von wetterspezifischen Daten (16.1) im lokalen Arbeitsmaschinenumfeld (17) eingerichtet ist, um bei einer von einer Wetterprognose abweichenden Veränderung des Wetters im Arbeitsmaschinenumfeld (17) eine durch die Steuerungsvorrichtung (7) auszuführende Reaktionsroutine (18) zu initiieren.

2. Autonome landwirtschaftliche Arbeitsmaschine (1) nach Anspruch 1, **dadurch gekennzeichnet, dass** das zumindest eine Sensorsystem (8) mehrere Sensoren (15) umfasst, die auf verschiedenen Sensortechnologien basieren.

3. Autonome landwirtschaftliche Arbeitsmaschine (1) nach Anspruch 2, **dadurch gekennzeichnet, dass** der zumindest eine Sensor (15) des zumindest einen Sensorsystems (8) auf Kameratechnologie und/oder akustischer Sensortechnologie basiert.

4. Autonome landwirtschaftliche Arbeitsmaschine (1) nach Anspruch 2 oder 3, **dadurch gekennzeichnet, dass** das zumindest eine Sensorsystem (8) als zumindest einen weiteren Sensor (15) einen Temperatursensor (15.3), ein Anemometer (15.4), ein Hygrometer (15.5), ein Barometer (15.6) und/oder ein Ombrometer (15.7) umfasst.

5. Autonome landwirtschaftliche Arbeitsmaschine (1) nach einem der vorangehenden Ansprüche, **dadurch gekennzeichnet, dass** die Steuerungsvorrichtung (8) dazu eingerichtet ist, basierend auf einer durchgeführten Geschwindigkeitsmessung und einer Ermittlung einer Drehzahl von Antriebsrädern eine Bestimmung eines Schlupfes durchzuführen.

6. Autonome landwirtschaftliche Arbeitsmaschine (1) nach einem der vorangehenden Ansprüche, **dadurch gekennzeichnet, dass** die Steuerungsvorrichtung (8) dazu ausgeführt und eingerichtet ist, die Auswertung der von dem zumindest einen Sensorsystem (7) empfangenen wetterspezifische Daten (16.1) durch ein neuronales Netzwerk (20) durchzuführen.

7. Autonome landwirtschaftliche Arbeitsmaschine (1) nach einem der vorangehenden Ansprüche, **dadurch gekennzeichnet, dass** Schwellwerte (22) für von dem zumindest einen Sensorsystem (8) empfangene wetterspezifische Daten (16.1) in einer Speichereinheit (21) der Steuerungsvorrichtung (7) hinterlegt oder hinterlegbar sind.

8. Autonome landwirtschaftliche Arbeitsmaschine (1) nach Anspruch 7, **dadurch gekennzeichnet, dass** das Überschreiten zumindest eines der Schwellwerte (22) die Ausführung der Reaktionsroutine (18) initiiert.

9. Autonome landwirtschaftliche Arbeitsmaschine (1) nach einem der vorangehenden Ansprüche, **dadurch gekennzeichnet, dass** die Reaktionsroutine (18) automatisch die Ausführung eines vorprogrammierten Ablaufs durch die autonome Arbeitsmaschine (1) initiiert oder einen Hinweis an eine entfernte Benutzerschnittstelle (23) übermittelt, welcher eine Aufforderung zum Eingreifen in die autonome Steuerung durch einen Bediener (24) umfasst.

10. Autonome landwirtschaftliche Arbeitsmaschine (1) nach Anspruch 9, **dadurch gekennzeichnet, dass** der vorprogrammierte Ablauf das Speichern der letzten Arbeitsposition sowie das Fortführen der landwirtschaftlichen Arbeitsaufgabe (14), das Anfahren einer vordefinierten Warteposition oder das Anfahren einer vordefinierten Abholposition umfasst.

11. Autonome landwirtschaftliche Arbeitsmaschine (1) nach Anspruch 9 oder 10, **dadurch gekennzeichnet, dass** die Steuerungsvorrichtung (7) zum Empfang und zur Ausführung einer durch den Bediener (24) vorgegebenen Instruktion ausgeführt und eingerichtet ist.

12. Autonome landwirtschaftliche Arbeitsmaschine (1) nach einem der Ansprüche 9 bis 11, **dadurch gekennzeichnet, dass** die Arbeitsmaschine (1) zur Fortführung der landwirtschaftlichen Arbeitsaufgabe (14) die gespeicherte letzte Arbeitsposition ansteuern, wobei die Steuerungsvorrichtung (7) dazu eingerichtet ist, von dem zumindest einen auf Kameratechnologie basierenden Sensor (15) des zumindest einen Sensorsystems (8) solche Umfelddaten (16) zu empfangen, die auf die aktuelle Beschaffenheit des zu bearbeitenden Feldes (2) schließen lassen

13. Autonome landwirtschaftliche Arbeitsmaschine (1) nach einem der Ansprüche 9 bis 12, **dadurch gekennzeichnet, dass** das zumindest eine Sensorsystem (8) dazu eingerichtet ist, kontinuierlich wetterspezifische Daten (16.) an die entfernte Benutzerschnittstelle (24) und/oder ein entferntes Verwaltungssystem (4) zu übermitteln.

14. Autonome landwirtschaftliche Arbeitsmaschine (1) nach einem der Ansprüche 9 bis 13, **dadurch gekennzeichnet, dass** bei einem automatischen Ausführen der Reaktionsroutine ein Auswertungsalgorithmus der Steuerungsvorrichtung (7) über die auszuführende Reaktionsroutine (18) entscheidet, um auf eine unvorhergesehene Wetterveränderung zu reagieren.

15. Verfahren zum Betreiben einer autonomen landwirtschaftlichen Arbeitsmaschine (1), welche zumindest ein Sensorsystem (8) mit zumindest einem Sensor (15) zur Umfelddetektion der Arbeitsmaschine (1) sowie eine Steuerungsvorrichtung (7), die zum Empfang und zur Auswertung von Umfelddaten (16), die das zumindest eine Sensorsystem (8) bereitstellt und übermittelt, ausgeführt und eingerichtet ist, umfasst **dadurch gekennzeichnet, dass** der zumindest eine Sensor (15) des zumindest einen Sensorsystems (8) auf einer Sensortechnologie basiert, durch welche wetterspezifische Daten (16.1) im lokalen Arbeitsmaschinenumfeld (17) detektiert werden, wobei bei einer von einer Wetterprognose abweichenden Veränderung des Wetters im Arbeitsmaschinenumfeld (17) eine durch die Steuerungsvorrichtung (7) auszuführende Reaktionsroutine (18) initiiert wird.
